Europäisches Patentamt

**European Patent Office**

**Office européen des brevets**

(11) Numéro de publication: **0 165 828**

**A1**

# (12) DEMANDE DE BREVET EUROPEEN

(21) Numéro de dépôt: 85400800.0

(22) Date de dépôt: 24.04.85

(51) Int. Cl.⁴: **H 02 G 7/08**
H 02 G 1/02, F 16 L 3/22

(30) Priorité: 25.04.84 FR 8406486

(43) Date de publication de la demande:
27.12.85 Bulletin 85/52

(84) Etats contractants désignés:
DE GB

(71) Demandeur: GORO S.A.
Avenue de Sylvie
F-77500 Chelles(FR)

(72) Inventeur: Preynat, Pierre
3, rue Jugan
F-34000 Montpellier(FR)

(72) Inventeur: Bouchez, Guy
Rue de Goas-Gabel
F-22700 Louannec(FR)

(72) Inventeur: Le Houerou, Gilbert
Convenant Quillien Rospez
F-22300 Lannion(FR)

(72) Inventeur: Villain, Charles
54, Avenue de Rigny
F-94360 Bry Sur Marne(FR)

(74) Mandataire: Tony-Durand, Serge
Cabinet Tony-Durand 22, Boulevard Voltaire
F-75011 Paris(FR)

(54) Dispositifs d'attache d'un ou plusieurs câbles aériens et appareil pour monter de tels dispositifs sur les câbles à attacher.

(57) Dispositif d'attache permettant de solidariser un ou plusieurs câble portés avec un câble porteur et comprenant deux pièces, respectivement mâle et femelle, susceptibles d'être assemblées l'une avec l'autre et aptes à former entre elles des passages pour les câbles correspondants.

La pièce femelle (27) de ce dispositif présente au moins deux encoches débouchant sur l'un au moins de ses côtés destinés à être disposés verticalment, à savoir une encoche (34) pour le câble porteur (18) et au moins une encoche (30, 31) pour un ou plusieurs câbles portés (20). Quant à la pièce mâle correspondante (28), elle comporte un doigt (38) apte à venir se placer devant le fond des encoches en emprisonnant ainsi les câbles placés dans celles-ci.

De tels dispositifs peuvent être utilisés pour attacher entre eux, à intervalles déterminés, les différents câbles d'une ligne de télécommunication avec le câble porteur de ceux-ci.

FIG.5

"Dispositifs d'attache d'un ou plusieurs câbles aériens et appareil pour monter de tels dispositifs sur les câbles à attacher"

La présente invention a pour objet un dispositif destiné à assembler souplement entre eux plusieurs câbles aériens assurant la transmission téléphonique ou électrique, en les solidarisant avec un câble porteur, de manière à conférer à l'ensemble une souplesse suffisante et une bonne résistance mécanique. Un tel dispositif peut également être employé pour lier un seul câble de transmission avec un câble porteur.

Il existe déjà un certain nombre de dispositifs d'attache destinés à un tel usage. Cependant, ceux-ci ne conviennent pas pour le problème particulier qui est à la base de la présente invention, c'est-à-dire l'installation de réseaux aériens de télécommunications comprenant plusieurs câbles portés relativement fragiles, tels que des câbles comportant des conducteurs en cuivre ou en bronze, ou des fibres optiques.

Ainsi le brevet DE 901.186 décrit un dispositif d'attache permettant de solidariser ensemble un câble porté et un câble porteur. Ce dispositif est constitué par deux pièces complémentaires, respectivement mâle et femelle, dont la première est constituée par un arceau susceptible d'être placé à cheval sur le câble porté, cependant que la seconde affecte la forme d'un berceau en U destiné à être disposé au dessous du câble porté, les branches latérales de cette seconde pièce étant fixées sur les côtés de la première par l'intermédiaire de moyens d'accrochage. Ce dispositif a l'avantage de pouvoir être monté rapidement. Cependant, il présente le grave inconvénient que la fixation de la pièce femelle sur la pièce mâle est peu sûre. Or, le désaccouplement de ces deux pièces se traduit par une chute du câble porté. Par ailleurs, ce dispositif d'attache ne permet de solidariser qu'un seul câble porté avec le câble porteur. En conséquence, ce dispositif ne peut pas résoudre le problème à la base de l'invention, c'est-à-dire la réalisation de réseaux de télécommunication comportant plusieurs câbles portés attachés à un câble porteur.

Pour sa part, le brevet DE 425.932 décrit un dispositif d'attache destiné au même usage que le précédent et qui est constitué par une pièce unique en forme d'arceau destinée à être placée à cheval sur le câble porteur dont les branches présentent des alvéoles ménageant les passages nécessaires pour un câble porteur, ainsi que pour un câble porté situé au dessous de celui-ci. Cette pièce est réalisée en matière élastique et il est prévu un boulon inférieur de serrage permettant de serrer les extrémités inférieures de ces deux branches, après mise en place des câbles dans leurs logements. Cependant, ce dispositif est peu pratique à poser car il est nécessaire d'enlever le boulon de serrage pour la mise en place des câbles. Par ailleurs, ce dispositif est essentiellement conçu pour attacher un seul câble porté sur le câble porteur. Il est vrai que dans la variante représentée à la figure 5 de ce brevet, il est prévu la possibilité d'attacher deux câbles portés. Toutefois, l'un d'entre eux se trouve alors disposé au dessus du câble porteur , ce qui est une très mauvaise solution pour des câbles de transmission relativement fragiles. De plus, cette solution ne permet tout au plus que l'attache de deux câbles portés, ce qui ne résoud toujours pas le problème en cause.

C'est pourquoi, la présente invention a pour but de réaliser un dispositif d'attache conçu pour pouvoir solidariser plusieurs câbles porté à un même câble porteur en assurant à la fois une bonne tenue mécanique de l'ensemble et une souplesse suffisante pour ne pas détruire les câbles portés, et en maintenant entre les différents câbles un écartement suffisant pour éviter la prise au vent, ainsi que l'accumulation de glace en hiver. Cependant, ce dispositif est également agencé de manière à pouvoir être très facilement mis en place sur les câbles à solidariser, de façon qu'une série de tels dispositifs puisse être répartie de place en place sur toute la longueur d'une ligne de télécommunications, en étant éventuellement installée au moyen d'un appareil approprié.

A cet effet, le présent dispositif d'attache comprend deux pièces, respectivement mâle et femelle, susceptibles d'être assemblées l'une avec l'autre et aptes à former entre elles des passages pour les câbles correspondants, et il est caractérisé en ce que la pièce femelle présente au moins deux encoches débouchant sur l'un au moins de ses côtés destinés à être disposés verticalement, à savoir une encoche pour le câble porteur et au moins une encoche pour un câble porté, et en ce que la pièce mâle comporte un doigt apte à venir se placer devant le fond des encoches en emprisonnant ainsi les câbles placés dans celles-ci.

Ainsi, le présent dispositif peut être mis en place très facilement sur une ligne de télécommunication en engageant les différents câbles dans les encoches de la pièce femelle et en enfonçant ensuite la pièce mâle à l'intérieur de celle -ci, ce qui assure alors l'emprisonnement des câbles dans leurs différents logements respectifs. A ce sujet, il faut noter qu' en position d'attente la pièce mâle de chaque dispositif d'attache est très légèrement engagée dans la pièce femelle, de sorte qu'il suffit ensuite de l'enfoncer sans qu'il y ait lieu de procéder sur place à une opération d'assemblage.

Dans une forme particulière de réalisation, la pièce femelle affecte la forme d'un boîtier ouvert à son extrémité supérieure et la pièce mâle est constituée par un tiroir susceptible d'être engagé à l'intérieur de ce boîtier par l'extrémité supérieure de celui-ci, ce tiroir comportant, dans l'alignement du fond des encoches de la pièce femelle, une gorge destinée à recevoir les câbles correspondants.

4     0165828

Dans une autre forme de réalisation, la pièce femelle du présent dispositif est constituée par une pièce pleine présentant une ou deux séries d'encoches débouchant sur l'un de ses côtés verticaux, ou les deux, et qui comporte , pour chaque série d'encoche, un canal débouchant à l'extrémité supérieure de cette pièce et coupant les encoches correspondantes en un point intermédiaire de leur longueur, la pièce mâle portant alors un doigt de verrouillage destiné à être engagé dans ce canal pour emprisonner ainsi les câbles disposés dans le fond des encoches correspondantes.

De préférence, dans l'un et l'autre cas, les encoches de réception des câbles portés comportent des éléments compressibles permettant d'insérer des câbles de diamètre différent sans risque de détérioration de ceux-ci.

L'invention a également pour objet un appareil permettant le montage d'un tel dispositif d'attache sur une ligne formée par un câble porteur et un ou plusieurs câbles portés. Cet appareil est caractérisé en ce que le boitier de celui-ci est pourvu de galets de suspension aptes à rouler sur le câble porteur pour permettre le déplacement de cet appareil le long de celui-ci, ce boitier comportant par ailleurs d'une part un magasin apte à recevoir une série de dispositifs d'attache sur chacun desquels la pièce mâle est très légèrement engagée dans la pièce femelle et d'autre part un premier poussoir pour la mise en place d'un dispositif d'attache sur les câbles et un second poussoir à déplacement vertical pour l'enfoncement ultérieur de la pièce mâle de ce dispositif dans la pièce femelle.

Cependant, d'autres particularités et avantages de l'objet de l'invention apparaitront au cours de la description suivante. Celle-ci est donnée en référence au dessin annexé, à simple titre d'exemple, sur lequel :

La figure 1 est une vue schématique en perspective représentant un réseau téléphonique aérien,

La figure 2 est une vue schématique en perspective à plus grande échelle illustrant un mode de fixation des câbles porteur et portés sur un poteau,

La figure 3 est une vue schématique en perspective d'un premier mode de réalisaion d'un dispositif d'attache selon l'invention,

La figure 4 est une vue en coupe transversale selon la ligne IV-IVde la figure 3,

La figure 5 est une vue en coupe verticale selon la ligne V-V de la figure 4, mais sur laquelle le dispositif correspondant est représenté en position d'attente avant mise en place des câbles à solidariser,

La figure 6 est une vue en élévation d'une autre forme de réalisation du présent dispositif d'attache, également représenté en position d'attente,

La figure 7 en est une vue en coupe selon la ligne VII-VII de la figure 6, après mise en place et emprisonnement des câbles à solidariser,

La figure 8 est une vue partielle en perspective d'une ligne de télécommunications sur laquelle sont installés deux dispositifs d'attache selon les figures 6 et 7, l'un d'entre eux étant représenté en cours d'installation,

Les figures 9 et 10 sont des vues, respectivement en élévation et en perspective de deux autre formes de réalisation encore du dispositif d'attache selon l'invention ;

La figure 11 est une vue schématique en perspective d'un appareil servant au montage de dispositifs d'attache selon l'invention sur les câbles à solidariser.

Les figures 12 et 13 sont des schémas illustrant deux phases successives de l'opération de montage d'un tel dispositif d'attache au moyen de cet appareil.

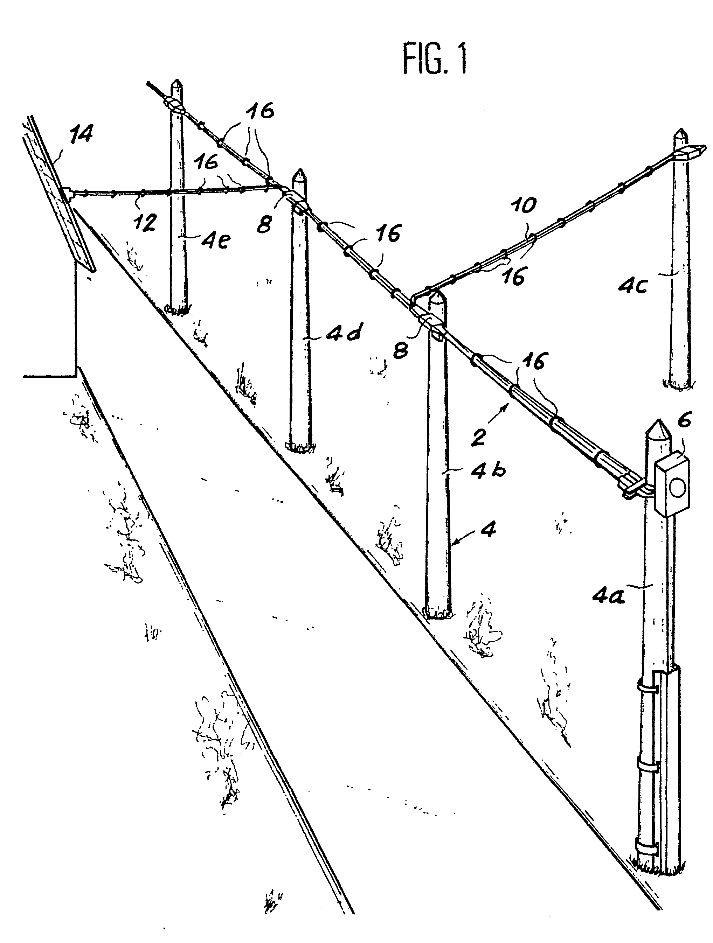

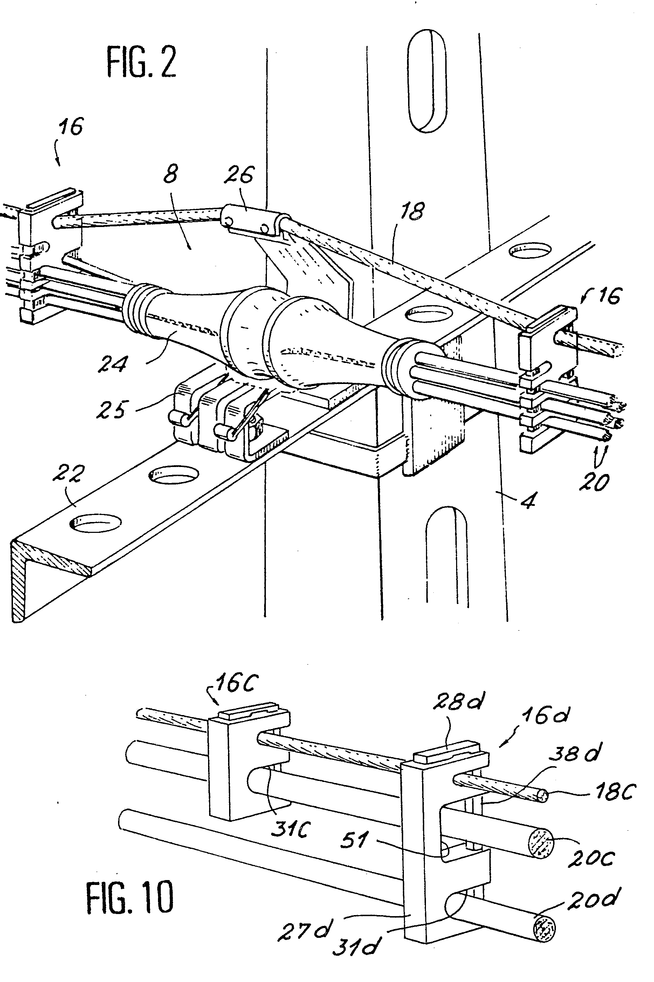

La figure 1 représente une ligne 2 de câbles téléphoniques, par exemple, supportés par un certain nombre de poteaux 4. Le premier de ces poteaux, portant la référence 4a, supporte une boîte de raccordement 6. Le deuxième poteau 4b est équipé à sa partie supérieure d'un dispositif de fixation 8 qui sera décrit plus en détail ci-après en référence à la figure 2. A partir du poteau 4b, l'un des câbles de transmission 10 est dirigé vers un poteau 4c. Le reste de la ligne est dirigé vers un quatrième poteau 4d équipé d'un dispositif de support 8 identique au précédent et, à partir de ce poteau 4c, un câble 12 est dirigé vers une habitation 14. Le reste de la ligne 2 va ensuite vers un poteau 4e, chacun des câbles composant la ligne étant dirigé à partir d'un endroit déterminé vers le lieu d'utilisation. L'ensemble de câbles constituant la ligne 2 comporte, de manière classique, un câble porteur et plusieurs câbles portés et elle est équipée d'une série de dispositifs d'attache 16 selon l'invention, qui sont disposés de place en place le long des câbles, de tels dispositifs d'attache équipant également les câbles 10 et 12.

La figure 2 représente un exemple de réalisation du système de fixation 8 de la ligne 2 sur un poteau 4. On voit sur cette figure que cette ligne se compose d'un câble porteur 18 (par exemple un câble d'acier toroné) et de plusieurs câbles portés 20 pouvant être des câbles téléphoniques, électriques, à fibres optiques, etc... Le système de fixation 8 comporte une traverse 22 fixée au poteau 4 et qui est destinée à servir de support à un manchon 24 en matière élastique à l'intérieur duquel sont enfermés les câbles portés 20. Le manchon d'attache de ces câbles est fixé sur un support 25, lui-même porté par la traverse 22. Cependant, cette dernière porte également une potence 26 sur laquelle est fixé le câble porteur 18 .

0165828

La figure 2 montre également deux dispositifs d'attache 16 selon l'invention qui sont situés de part et d'autre du système de fixation 8.

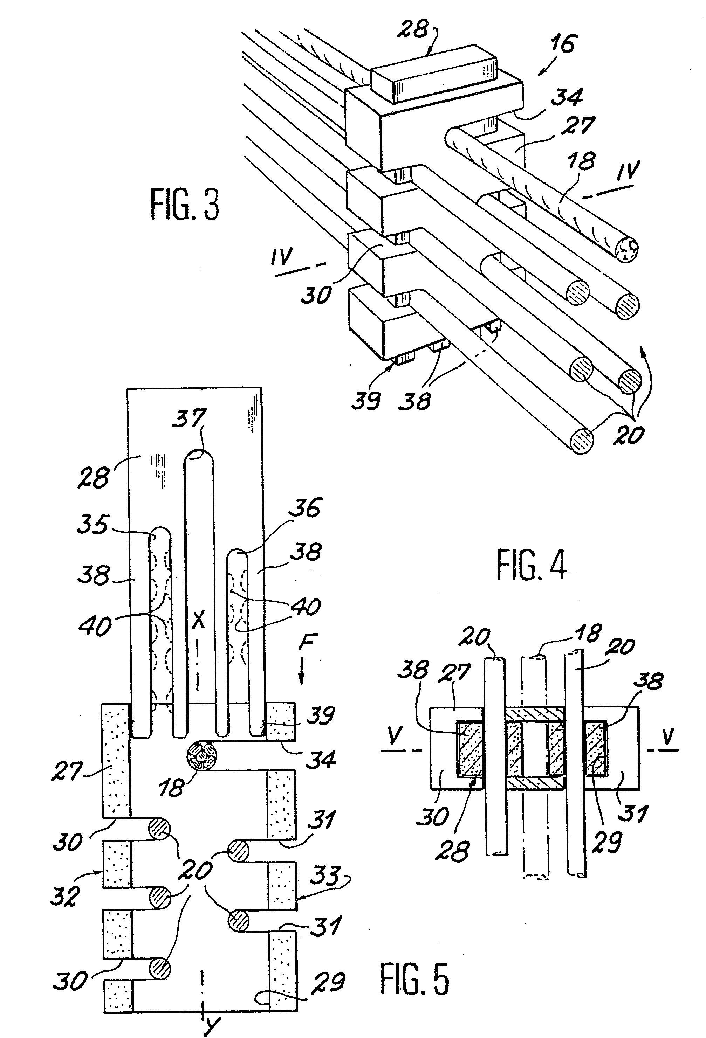

Dans l'exemple représenté aux figures 3 à 5, chacun de ces dispositifs est constitué par la combinaison d'une pièce femelle 27 en forme de boitier creux et d'une pièce mâle 28 constituant en quelque sorte un tiroir. Celui-ci peut être enfoncé dans l'évidement intérieur 29 du boitier 27, lequel débouche aux deux extrémités supérieure et inférieure de celui-ci. Ce boitier comporte deux séries d'encoches 30 et 31 qui débouchent sur deux côtés opposés 32 et 33 de celui-ci, ces côtés étant destinés à être disposés verticalement lors de la mise en place du présent dispositif. Comme représenté, les encoches 30 et 31 s'étendent alors, pour leur part, à l'horizontale. Cependant elles pourraient être également inclinées vers le haut ou vers le bas.

En plus de ces deux séries d'encoches, qui sont destinées à recevoir les câbles portés 20, il est prévu une encoche supérieure 34 qui est pour sa part destinée à recevoir le câble porteur 18. Le fond de cette encoche se trouve essentiellement situé dans le plan médian X-Y du boitier 27, cependant que les fonds des deux séries d'encoches 30 et 31 sont disposés de part et d'autre de ce plan.

La pièce mâle 28 formant tiroir comporte trois gorges profondes 35, 36 et 37 qui s'étendent verticalement et débouchent à son extrémité inférieure. La disposition de ces gorges est telle que lors de l'enfoncement du tiroir 28 à l'intérieur du boitier 27, selon la flèche F, les câbles 20 disposés dans les encoches 30, se trouvent emprisonnés dans la gorge 35, cependant que les câbles 20 placés dans les encoches 31 se trouvent emprisonnés eux-mêmes à l'intérieur des encoches 30. Pour sa part, le câble porteur 18 est alors emprisonné dans le fond de la gorge 37. Ainsi, les différents câbles se trouvent empêchés de sortir de leurs logements du fait même que ,grâce à sa découpe particulière le tiroir 28 comporte plusieurs doigts de verrouillage 38 qui se trouvent disposés devant le fond des différentes encoches.

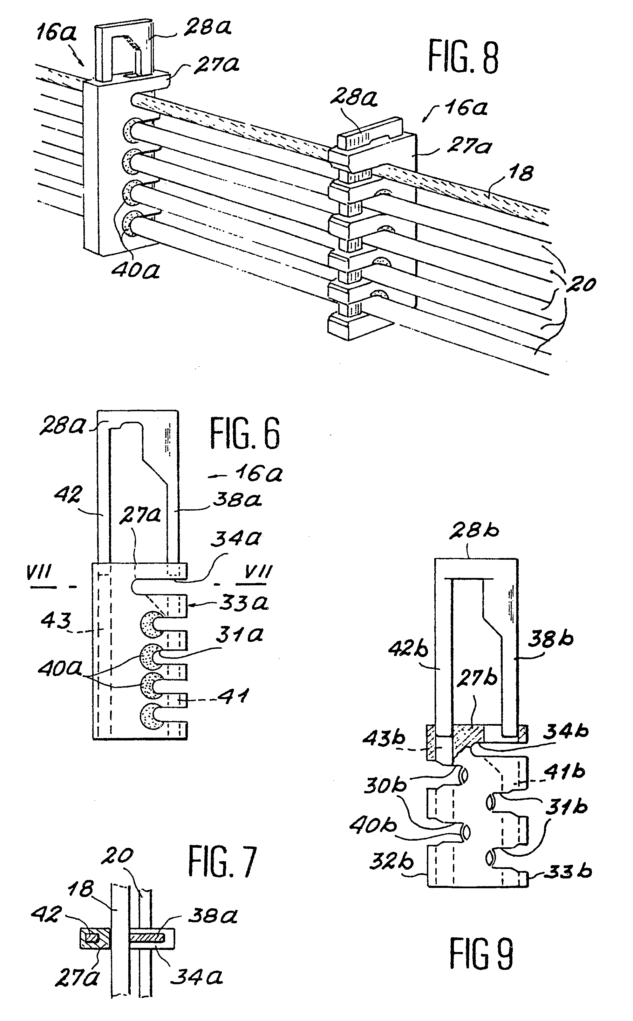

Il convient de noter que dans sa position d'attente, c'est-à-dire avant montage, chaque dispositif d'attache présente pour particularité que l'extrémité inférieure du tiroir 28 est très légèrement engagée dans l'extrémité supérieure du boitier 27, comme représenté à la figure 5. Ainsi, après que les câbles 18 et 20 aient été placés dans les encoches respectives 30, 31 et 34, il suffit d'enfoncer ce tiroir par coulissement selon la flèche F pour emprisonner tous les câbles, sans qu'il y ait à procéder à une opération d'assemblage des deux pièces 27 et 28.

De préférence, la hauteur du tiroir 28 est telle que les extrémités des doigts de verrouillage 38 de celui-ci font saillie à l'extérieur du boitier 27 après emboitement (voir figure 3). Ainsi, ces extrémités peuvent comporter des bourrelets 39 ou autres reliefs appropriés, susceptibles d'assurer l'assemblage des deux pièces 27 et 28 l'une avec l'autre, tout en permettant leur démontage ultérieur. Cependant, il faut observer que le poids des câbles portés ne risque en aucune façon de provoquer un désaccouplement de ces deux pièces puisque ces câbles sont logés dans des encoches de la pièce femelle 27, de même que le câble porteur 18 lui-même.

De préférence, les faces internes des gorges 35 et 36, qui sont destinées à recevoir les câbles portés 20, comportent des protubérances élastiques 40 destinées à assurer l'immobilisation de câble de diamètres différents ou de sections non constantes sans risque de détérioration de ceux-ci.

Les figures 6 à 8 représentent une autre forme de réalisation des dispositifs d'attache selon l'invention. Chacun de ces dispositifs est constitué par la combinaison d'une pièce femelle 27a et d'une pièce mâle 28a. La pièce 27a est constituée par un corps plein comportant une série d'encoches 31a débouchant sur l'un de ses côtés verticaux, en l'occurrence son côté 33a. Ces différentes encoches sont destinées à recevoir des câbles portés 20. Cependant, au dessus d'elles, il est prévu une encoche 34a débouchant également sur le côté vertical 33a et qui est destinée à recevoir le câble porteur 18. Dans le fond de chaque encoche 31a, il est prévu un tampon 40a, en matière élastique, permettant de serrer le câble porté correspondant sans risque de détérioration de celui-ci. Chacun de ces tampons peut être rapporté dans le fond de l'encoche correspondante, ou réalisé par un procédé approprié lors de la fabrication de la pièce femelle 27a.

Celle-ci présente par ailleurs un canal 41 qui s'étend parallèlement au côté vertical 33a et qui coupe les différentes encoches 31a en un point intermédiaire de leur longueur. Ce canal, qui débouche à la fois à l'extrémité supérieure et à l'extrémité inférieure, est destiné à recevoir un doigt de verrouillage 38a porté par la pièce mâle 28a. Cependant, celle-ci porte un autre doigt parallèle 42 auquel correspond un autre canal 43 de la pièce femelle 27a, ce second doigt jouant simplement le rôle d'un organe de guidage lors de l'enfoncement de la pièce mâle 28a.

Comme précédemment, l'extrémité inférieure de la pièce mâle 28a, ou plus exactement l'extrémité inférieure des deux doigts 38 et 42 de ceux-ci, se trouve très légèrement engagée dans l'extrémité supérieure de la pièce femelle 27a lorsque le dispositif d'attache correspondant est en position d'attente. En conséquence, là encore après avoir engagé les câbles 18 et 20 dans les encoches correspondantes, il suffit d'enfoncer la pièce mâle 28a formant tiroir pour que ces câbles se trouvent emprisonnés et solidarisés les uns avec les autres. De préférence, les dispositifs d'attache ainsi constituées sont montés alternativement dans un sens et dans l'autre, comme représenté sur la figure 8.

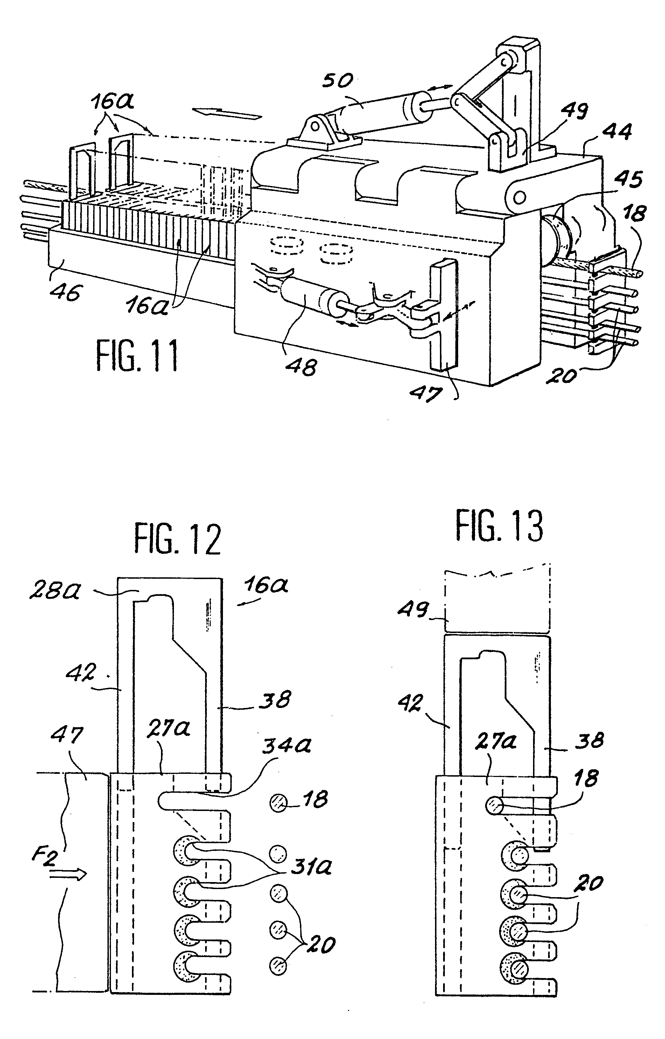

La figure 9 représente une variante du dispositif d'attache selon les figures 6 à 8. Dans cette variante, la pièce femelle correspondante 27b comporte deux séries d'encoches 30b et 31b débouchant respectivement sur deux côtés verticaux opposés 32b et 33b de celle-ci. En plus de ces encoches, qui sont destinées à recevoir les câbles portés 20, il est prévu une encoche supérieure 34b destinée à recevoir le câble porteur 18.

Cette pièce femelle comporte également deux canaux verticaux 41b et 43b qui coupent les encoches 30b et 31b en un point intermédiaire de leur longeron. Pour sa part, la pièce mâle 28 formant tiroir est pourvue de deux doigts de verrouillage 38b et 42b destinés à être enfoncés dans les deux canaux 41b et 43b. De préférence, les encoches 30b et 31b comportent dans leur fond une lamelle élastique 40b qui est destinée à remplacer en quelque sorte les tampons 40a prévus dans la forme de réalisation précédente.

La figure 10 représente une autre variante dans laquelle le dispositif correspondant est conçu pour permettre d'attacher un ou plusieurs câbles portés à un câble porteur 18c portant déjà un ou plusieurs câbles portés. En l'occurrence dans l'exemple représenté, ce câble 18c porte déjà un câble porté unique 20c attaché à lui par un dispositif d'attache 16c du même type que celui des figures 6 à 8, avec cette seule différence qu'il comporte une seule encoche de réception 31c.

L'attache d'un ou plusieurs câbles portés supplémentaires, en l'occurrence un seul câble 20d dans l'exemple représenté, est assuré par le dispositif 16d dont la pièce femelle 27d présente pour particularité de comporter un large évidement 51 pour le passage du câble porté 20c qui est déjà en place. A son extrémité inférieure, cette pièce femelle 27d comporte une ou plusieurs encoches destinées à recevoir le ou les câbles portés supplémentaires à attacher au même câble porté. Bien entendu, le doigt de verrouillage 38d de la pièce 28d présente une longueur suffisante pour venir emprisonner le ou les câbles 20d.

La figure 11 représente un appareil spécialement conçu pour le montage de dispositifs d'attache selon l'invention sur une ligne de télécommunications afin de solidariser ensemble les câbles portés 20 de cette ligne et le câble porteur de celle-ci. Dans l'exemple représenté, cet appareil est plus spécialement conçu pour le montage de dispositifs d'attache 16a du type représenté aux figures 6 et 7, c'est-à-dire de dispositifs dont la pièce femelle 27a présente des encoches toutes orientées dans la même direction.

Le boitier 44 de cet appareil présente la forme générale d'un arceau enjambant les câbles 18 et 20, ce boitier étant réalisé en deux parties articulées l'une sur l'autre de façon à pouvoir être ouvert pour être dégagé des câbles. Dans l'extrémité supérieure du passage ainsi ménagé dans ce boitier, il est prévu plusieurs galets de suspension 45 destinés à rouler sur le câble porteur 18 pour permettre le déplacement de l'appareil le long de la ligne correspondante. L'un au moins de ces galets est moteur pour assurer l'entrainement de l'appareil selon la flèche F1. Cependant, cet entrainement peut également être assuré par d'autres moyens, par exemple par un vérin, à mouvement alternatif, portant une pince apte à saisir le câble porteur.

Cet appareil étant destiné à assurer le montage de dispositifs 16a orientés alternativement dans un sens et dans l'autre (comme représenté sur la figure 8), son boitier 44 porte deux magasins 46 destinés à recevoir deux séries de dispositifs 16a orientées en sens inverse afin de constituer en quelque sorte des chargeurs pour l'appareil. Chacune de ces séries de dispositifs est montée coulissante dans le magasin correspondant et des moyens de poussée (non représentés) tendent à repousser ceux-ci vers l'arrière du boitier 44.

Sur chacun de ces côtés, celui-ci comporte un poussoir 47 susceptible d'être actionné par un vérin 48 pour exercer une poussée transversale selon la flèche F2 sur le premier dispositif d'attache de la série correspondante afin de lui imprimer un mouvement transversal pour l'engager sur les câbles 18 et 20, de manière que ces derniers se trouvent placés dans les fonds des encoches 31a et 44a (voir figure 11).

Cependant, l'appareil comprend également un poussoir supérieur 49 à déplacement vertical. Ce poussoir qui, est actionné par un vérin 50, est apte à excercer une poussée sur la pièce mâle 28a du dispositif d'attache correspondante, juste après mise en place de celui-ci sur les câbles 18 et 20 (voir figure 12).

Ainsi, cet appareil est en mesure d'assurer le montage de dispositifs d'attache 16a à intervalles réguliers le long de la ligne formée par les câbles 18 et 20 de manière à assurer la solidarisation de ceux-ci. Du reste, l'agencement de ces dispositifs d'attache est spécialement conçu pour permettre une pose aisée de ceux-ci au moyen d'un tel appareil A ce sujet, il convient de rappeler à nouveau qu'en position d'attente la pièce mâle de chaque dispositif d'attache est déjà partiellement engagée à l'intérieur de la pièce femelle correspondante, de sorte qu'il suffit ensuite de l'y enfoncer complètement après mise en place des câbles dans les encoches de cette pièce.

Cependant, les dispositifs d'attache selon les figures 3 à 5 et ceux selon la figure 9, peuvent également être installés au moyen d'un appareil de montage du même genre. Dans un tel cas, l'engagement des câbles dans les encoches des pièces femelles n'est plus assuré par des poussoirs latéraux 47 mais par le guidage de ces câbles au fond de ces encoches grace à des organes de guidage appropriés, par exemple des galets. Il est alors prévu un seul magasin chargeur contenant une série de dispositifs d'attache qui sont placés l'un à la suite de l'autre, à intervalles réguliers, entre les câbles 18 et 20.

Mais, comme précédememnt cet appareil comporte un poussoir vertical 49 destiné à assurer l'enfoncement de la pièce mâle de chaque dispositif d'attache à l'intérieur de la pièce femelle correspondante.

En raison de leur conception, les dispositifs d'attache selon l'invention ont l'avantage non seulement de pouvoir être posés très facilement, mais également d'être en mesure d'assurer un maintien efficace des câbles d'une ligne téléphonique ou électrique avec un certain écartement entre le câble porteur et les câbles portés, ce qui diminue la prise au vent et la masse de givre qui risque de s'accumuler sur les fils en cas de gel. D'autre part, le maintien des câbles est très efficace, la pression exercée sur le câble porteur étant relativement importante, tandis que les câbles portés sont maintenus avec une pression suffisante pour éviter le glissement des éléments de maintien sur les câbles, mais cette pression est suffisamment faible pour ne pas risquer de détériorer les câbles.

# REVENDICATIONS

1 - Dispositif d'attache permettant de solidariser un ou plusieurs câbles portés avec un câble porteur et comprenant deux pièces, respectivement mâle et femelle, susceptibles d'être assemblées l'une avec l'autre et aptes à former entre elles des passages pour les câbles correspondants caractérisé en ce que la pièce femelle (27, 27a, ou 27b) présente au moins deux encoches débouchant sur l'un au moins de ses côtés destinés à être disposés verticalement, à savoir une encoche (34, 34a, 34b) pour le câble porteur (18) et au moins une encoche (30, 31 ou 31a ou 30b, 31b) pour un ou plusieurs câbles portés (20), et en ce que la pièce mâle (28, 28a, 28b) comporte un doigt (38, 38a, 38b, 42b) apte à venir se placer devant le fond des encoches en emprisonnant ainsi les câbles placés dans celles-ci.

2 - Dispositif d'attache selon la revendication 1, caractérisé en ce que la pièce femelle affecte la forme d'un boitier (27) ouvert à son extrémité supérieure et la pièce mâle est constituée par un tiroir (28) suscepible d'être engagé à l'intérieur de ce boitiier par l'extrémité supérieure de celui-ci, ce tiroir comportant, dans l'alignement du fond des encoches de la pièce femelle, une ou plusieurs gorges (35, 36, 37) destinées à recevoir les câbles correspondants.

3 - Dispositif d'attache selon la revendication 2, caractérisé en ce que le boitier (27) constituant la pièce femelle présente deux séries d'encoches (30 et 31) débouchant respectivement sur l'un et l'autre de ses deux côtés verticaux et le tiroir (28) formant la pièce mâle comporte deux doigts (38) aptes à venir se placer en regard du fond des encoches de l'une et l'autre de ces deux séries.

4 - Dispositif d'attache selon la revendication 3, caractérisé en ce que le fond de l'encoche supérieure (34), destinée à recevoir le câble porteur (18) est situé sensiblement dans l'axe vertical médian du boitier (27) constituant la pièce femelle, cependant que les fonds des autres encoches (30, 31) sont disposés de part et d'autre de cet axe.

5 - Dispositif d'attache selon la revendication 1, caractérisé en ce que la pièce femelle de celui-ci est constituée par une pièce pleine (27a ou 27b) présentant une ou deux séries d'encoches (31a, 34a ou 30a, 31a et 34a) débouchant sur l'un de ses côtés verticaux, ou les deux, et qui comportent, pour chaque série d'encoches, un canal (41, ou 41b et 43b) débouchant à l'extrémité supérieure de cette pièce et coupant les encoches correspondantes en un point intermédiaire de leur longueur, la pièce mâle portant alors un ou deux doigts de verrouillage (38a, ou 38b et 42b) destinés à être chacun engagé dans un tel canal pour emprisonner ainsi les câbles disposés dans le fond des encoches correspondantes.

6 - Dispositif d'attache selon la revendication 5, caractérisé en ce que les encoches prévues dans la pièce femelle (27a) de celui-ci débouchent toutes sur le même côté vertical (33a) de cette pièce, cependant qu'en plus du doigt de verrouillage (38a), destiné à fermer ces encoches, la pièce mâle (28a) porte un doigt parallèle de guidage (42) auquel correspond un second canal (43) ménagé dans la pièce femelle

7 - Dispositif d'attache selon l'une des revendications précédentes, caractérisé en ce que dans les encoches prévues dans la pièce femelle pour recevoir les câbles portés, il est prévu un élément élastique (40 ou 40a) permettant de serer ces câbles sans risque de détérioration de ceux-ci.

8 - Appareil pour le montage de dispositifs d'attache selon l'une des revendications précédentes à la fois sur un câble porteur et sur un ou plusieurs câbles portés devant être solidarisés avec celui-ci au dessous de lui, caractérisé en ce que le boitier (44) de celui-ci est pourvu de galets (45) de suspension aptes à rouler sur le câble porteur (18) pour permettre le déplacement de cet appareil le long de celui-ci, ce boitier comportant par ailleurs d'une part un magasin (46) apte à recevoir une série de dispositifs d'attache (16, ou 16a, 16b) selon l'une des revendications précédentes sur chacun desquels la pièce mâle (28, 28a, 28b) est très légèrement engagée dans la pièce femelle (27, 27a, 27b) et d'autre part un premier poussoir pour la mise en place d'un dispositif d'attache sur les câbles et un second poussoir (49) à déplacement vertical pour l'enfoncement ultérieur de la pièce mâle de ce dispositif dans la pièce femelle.

9 - Appareil selon la revendication 8 pour le montage de dispositifs d'attache selon l'une des revendications 1, 2, 5 et 6, comportant une seule série d'encoches débouchant sur un même côté vertical de la pièce femelle, caractérisé en ce que le poussoir de mise en place de chaque dispositif d'attache, prélevé sur le magasin formant chargeur, est un poussoir (47) à déplacement transversal apte à agir sur le côté vertical de la pièce femelle de ce dispositif qui est dépourvu d'encoches.

10 - Appareil selon la revendication 8, caractérisé en ce qu'il comporte deux magasins (46) formant chargeurs qui sont destinés à recevoir deux séries de dispositifs d'attache orientés de façon inverse et en ce qu'il est alors prévu deux poussoirs (47) de mise en place se déplaçant transversalement en sens inverse pour mettre en place alternativement un dispositif d'attache d'une série et un dispositif d'attache de l'autre.

# FIG. 1

2,5

FIG. 2

16

8

26

18

16

24

25

22

20

4

16C

28d

16d

38d

18C

31C

51

20C

20d

FIG. 10

27d

31d

3.5

**FIG. 3**

**FIG. 4**

**FIG. 5**

FIG. 8

FIG. 6

FIG. 7

FIG 9

**FIG. 11**

**FIG. 12**

**FIG. 13**

## DOCUMENTS CONSIDERES COMME PERTINENTS

| Categorie | Citation du document avec indication en cas de besoin, des parties pertinentes | Revendication concernee | CLASSEMENT DE LA DEMANDE (Int Cl 4) |
|---|---|---|---|
| A | FR-A-2 385 929 (OHLSON)<br>* Page 2, ligne 17 - page 3, ligne 20; figures 1-3 * | 1 | H 02 G 7/08<br>H 02 G 1/02<br>F 16 L 3/22 |
| | --- | | |
| A | FR-A-1 242 149 (TECO)<br>* Page 2, colonne de droite, alinéa 2 * | 1,3 | |
| | --- | | |
| D,A | DE-C- 901 186 (BETTERMAN)<br>* Page 2, ligne 86 - page 3, ligne 24 * | 1,2 | |
| | --- | | |
| D,A | CH-A- 425 932 (MAAG)<br>* Page 1, lignes 40-56; figures 1,2 * | 1 | |
| | --- | | |
| A | DE-A-3 228 227 (SIEMENS)<br>* Page 1, lignes 1-32 * | 8 | DOMAINES TECHNIQUES RECHERCHES (Int Cl 4) |
| | ----- | | H 02 G 7/00<br>H 02 G 1/00<br>F 16 L 3/00 |

Le present rapport de recherche a été établi pour toutes les revendications

| Lieu de la recherche | Date d achevement de la recherche | Examinateur |
|---|---|---|
| LA HAYE | 14-08-1985 | TIELEMANS H.L.A. |